# EUROPÄISCHE PATENTSCHRIFT

(11) **EP 2 887 509 B1**
(45) Veröffentlichungstag und Bekanntmachung des Hinweises auf die Patenterteilung: **27.01.2021**
(21) Anmeldenummer: 13199008.7
(22) Anmeldetag: 20.12.2013
(51) Int. Cl.: H02K 9/28

(54) **Elektrische Kontaktvorrichtung für eine elektrische Maschine**
Electrical contacting device for an electric machine
Dispositif de contact électrique pour une machine électrique

(43) Veröffentlichungstag der Anmeldung: 24.06.2015
(73) Patentinhaber: Flender GmbH, 46395 Bocholt (DE)
(72) Erfinder: Binder, Herbert, 94127 Neuburg (DE)
(74) Vertreter: Maier, Daniel Oliver

(56) Entgegenhaltungen:
- DE-A1- 1 538 718
- DE-C- 905 511
- JP-A- 2011 205 815

## Beschreibung

Die vorliegende Erfindung betrifft eine elektrische Kontaktvorrichtung für eine elektrische Maschine mit einer Bürsteneinrichtung, die eine Bürste umfasst, einer Welle, die drehbar zur Bürsteneinrichtung gelagert ist, und einer Schleifringeinrichtung, die drehfest auf der Welle angeordnet ist, wobei die Schleifringeinrichtung einen Schleifring umfasst, der mit der Bürste der Bürsteneinrichtung in elektrischem Kontakt steht. Überdies betrifft die vorliegende Erfindung eine elektrische Maschine mit einer solchen elektrischen Kontaktvorrichtung. Schließlich betrifft die vorliegende Erfindung eine Windkraftanlage mit einer derartigen elektrischen Maschine.

Windkraftanlagen beziehungsweise Windkraftgeneratoren umfassen eine elektrische Maschine, die als Generator betrieben wird. Als elektrische Maschinen werden insbesondere doppelt gespeiste elektrische Maschinen verwendet. Durch die Leistungssteigerung im Bereich der doppelt gespeisten Windkraftanlagen werden die eingesetzten Komponenten immer höheren Belastungen ausgesetzt. Um dem hohen Kostendruck gerecht zu werden, versucht man, die Leistungserhöhung mit baugleichen Komponenten zu realisieren und läuft damit Gefahr, dass im Bereich der Schleifringübertragung die Temperaturen das zulässige Maß übersteigen und die Betriebssicherheit nicht mehr gegeben ist.

Es wird daher versucht, die Komponenten effektiver zu kühlen. Hierdurch steigen jedoch die Kosten bei der Fertigung der Windkraftanlage. Darüber hinaus werden bei steigenden Übertragungsströmen größere Schleifringanbauten verwendet. Beispielsweise werden die Schleifringe, die Bürstenbrücken und das Schleifringgehäuse entsprechend größer dimensioniert. Diese Maßnahmen haben aber auch höhere Fertigungskosten zur Folge.

Um der Leistungssteigerung gerecht zu werden, hat man bisher versucht, die Übertragungssysteme, also die Schleifringe, die Bürstenbrücke und das Schleifringgehäuse, bezüglich der Oberfläche so weit zu vergrößern, dass eine ausreichende Kühlung gegeben ist. Ein Radiallüfter wird üblicherweise ohne eine wesentliche Steuerung der Luftführung innerhalb des Schleifringgehäuses für das Ansaugen der nötigen Kühlluft von außen beziehungsweise aus dem Innenraum der Windkraftgondel verwendet.

Hierzu beschreibt die JP 2011 205815 A eine elektrische Kontaktvorrichtung mit einer Bürsteneinrichtung und einer Schleifringeinrichtung. Die Kontaktvorrichtung weist eine Mehrzahl von Kühlkanälen zum Kühlen der Schleifringe auf. Die Kühlkanäle erstrecken sich in axialer Richtung der Kontaktvorrichtung innerhalb der Schleifringeinrichtung.

Ferner beschreibt die DE 15 38 718 A1 eine Schleifringkühlung. Hierbei sind zwischen zwei Schleifringen mindestens drei Radiallüfter nebeneinander vorgesehen, wobei der mittlere Radiallüfter durch eine axiale Bohrung in den beiden Schleifringen und die außenliegenden Radiallüfter entlang der Oberfläche je eines Schleifrings Frischluft ansaugen und die erwärmte Luft radial nach außen befördern.

Die Patentschrift DE 905 511 offenbart eine Anordnung zur Kühlung von Schleifringen elektrischer Maschinen. Schleifringe werden zwischen Pressringen gehalten, die unmittelbar auf der Welle sitzen und mindestens teilweise mit radialen Öffnungen versehen sind.

Es ist Aufgabe der vorliegenden Erfindung, eine elektrische Kontaktvorrichtung für eine elektrische Maschine bereitzustellen, die effektiver betrieben werden kann.

Diese Aufgabe wird durch eine elektrische Kontaktvorrichtung mit den Merkmalen des Patentanspruchs 1 gelöst. Vorteilhafte Weiterbildungen der vorliegenden Erfindung sind Gegenstand der abhängigen Ansprüche.

Die erfindungsgemäße elektrische Kontaktvorrichtung für eine elektrische Maschine umfasst eine Bürsteneinrichtung, die eine Bürste umfasst, eine Welle, die drehbar zur Bürsteneinrichtung gelagert ist, und eine Schleifringeinrichtung, die drehfest auf der Welle angeordnet ist, wobei die Schleifringeinrichtung einen Schleifring umfasst, der mit der Bürste der Bürsteneinrichtung in elektrischem Kontakt steht, und wobei die elektrische Kontaktvorrichtung zwischen der Welle und der Schleifringeinrichtung eine Aussparung zum Führen eines Kühlmittelstroms aufweist. Zudem weist die Schleifringeinrichtung ein Trägerelement zum Halten des Schleifrings auf und das Trägerelement weist eine Mehrzahl von zweiten Kühlkanälen zum Führen des Kühlmittels auf, die sich im Wesentlichen in radialer Richtung der Welle erstrecken.

Mit der elektrischen Kontaktvorrichtung wird ein Schleifringkontakt hergestellt. Dieser kann beispielsweise in einer doppelt gespeisten elektrischen Maschine verwendet werden. Die elektrische Kontaktvorrichtung umfasst eine Bürsteneinrichtung, die zumindest eine Bürste aus elektrisch leitfähigem Material umfasst. Die zumindest eine Bürste kann in einem Bürstenhalter angeordnet sein. Durch Federkraft kann die Bürste gegen einen Schleifring der Schleifringeinrichtung gedrückt werden, wodurch eine elektrische Verbindung zwischen der Bürste und dem Schleifring hergestellt wird. Die Schleifringeinrichtung ist auf einer Welle angeordnet, die relativ zu der Bürsteneinrichtung drehbar ist.

Zwischen der Welle und der Schleifringeinrichtung ist eine Aussparung beziehungsweise ein Hohlraum vorgesehen. Dazu kann in die Welle und/oder im Schleifringträger eine entsprechende Aussparung eingebracht sein. In diese Aussparung kann ein Kühlmittel, insbesondere Umgebungsluft, eingebracht werden. Auf diese Weise kann eine Kühlung der Schleifringeinrichtung bereitgestellt werden. Somit können die Temperaturen im Betrieb der elektrischen Kontaktvorrichtung deutlich reduziert werden. Darüber hinaus können Schleifringeinrichtungen verwendet werden, die im Vergleich zu üblicherweise verwendeten Schleifringeinrichtungen eine geringere Baugröße aufweisen.

Die Schleifringeinrichtung weist ein Trägerelement zum Halten des Schleifrings auf und das Trägerelement weist eine Mehrzahl von zweiten Kühlkanälen zum Führen des Kühlmittels aufweist. Durch das Trägerelement der Schleifringeinrichtung können auch mehrere Schleifringe gehalten sein. Durch die zweiten Kühlkanäle in dem Trägerelement kann das Trägerelement und somit auch die Schleifringeinrichtung besonders effektiv gekühlt werden.

Das Trägerelement umfasst eine Mehrzahl von zweiten Kühlkanälen, die sich im Wesentlichen in radialer Richtung der Welle erstrecken. Insbesondere erstrecken sich die zweiten Kühlkanäle von einer ersten Seite des Trägerelements, das an die Aussparung grenzt, durch das komplette Trägerelement hindurch. Somit wird das Kühlmittel in den Bereich geleitet, an dem die Bürsten und die Schleifringe in Kontakt stehen. Somit kann dieser Bereich besonders effektiv gekühlt werden.

Die Aussparung umgibt die Welle entlang ihrer Umfangsrichtung vollständig. Somit erstreckt sich die Aussparung entlang der kompletten Umfangsrichtung der Welle beziehungsweise der Schleifringeinrichtung. Auf diese Weise wird ein entsprechender Hohlraum bereitgestellt, in dem ein Kühlmittel eingebracht werden kann und mit dem die Schleifringeinrichtung gleichmäßig gekühlt werden kann.

Des Weiteren ist zwischen der Welle und der Schleifringeinrichtung zumindest ein erster Kühlkanal angeordnet, der sich entlang einer axialen Richtung der Welle von einer Stirnseite der Schleifringeinrichtung zu der Aussparung hin erstreckt. Zwischen der Schleifringeinrichtung und der Welle können auch mehrere erste Kühlkanäle vorgesehen sein, die entlang der Umfangsrichtung gleichmäßig verteilt angeordnet sind. Durch die ersten Kühlkanäle, die beispielsweise als Nuten ausgebildet sein können, kann Kühlmittel beziehungsweise Kühlluft vom Äußeren der Schleifringeinrichtung zu dem Hohlraum, der zwischen der Welle und der Schleifringeinrichtung angeordnet ist, gefördert werden.

In einer weiteren Ausgestaltung weist die elektrische Kontakteinrichtung zumindest ein Luftleitelement auf, das das Kühlmittel beim Drehen der Schleifringeinrichtung in den zumindest einen Kühlkanal leitet. An den jeweiligen Eingängen der ersten Kühlkanäle kann ein Luftleitelement angeordnet sein, das die kühle Umgebungsluft in den jeweiligen ersten Kühlkanal und weiter in die Aussparung leitet. Das Luftleitelement kann insbesondere als Luftschaufel ausgebildet sein, die an der Stirnseite der Schleifringeinrichtung angeordnet ist. Wenn die Schleifringeinrichtung relativ zu der Bürsteneinrichtung gedreht wird, bewirkt die Luftleiteinrichtung, dass die Umgebungsluft in den zumindest einen ersten Kühlkanal geleitet wird. Somit kann auf einfache Weise eine Kühlung der Schleifringeinrichtung bereitgestellt werden.

Bevorzugt sind die Aussparung zwischen der Welle und der Schleifringeinrichtung und der zumindest eine zweite Kühlkanal in dem Trägerelement fluidisch verbunden. Somit kann das Kühlmedium beziehungsweise die Kühlluft von außen entlang des zumindest einen ersten Kühlkanals in die Aussparung und von dort durch den zumindest einen zweiten Kühlkanal nach außen geleitet werden. Auf diese Weise kann eine effektive Kühlung der Schleifringeinrichtung und der Bürsteneinrichtung bereitgestellt werden. Dadurch ergibt sich der weitere Vorteil, dass die Schleifringeinrichtung mit mehr Bürsten pro Phase belastet werden kann, was ohne diese Kühlung nicht möglich wäre. Somit sind höhere Leistungsstufen als bisher möglich.

In einer Ausgestaltung umfasst die elektrische Kontaktvorrichtung einen Radiallüfter zum Fördern des Kühlmittels. Mit einem derartigen Radiallüfter, der beispielsweise auf der Welle angeordnet sein kann, kann ein entsprechender Kühlmittelstrom zum Kühlen der elektrischen Kontaktvorrichtung bereitgestellt werden. Mit einem derartigen Radiallüfter kann ein entsprechender Volumenstrom des Kühlmittels gefördert werden.

In einer weiteren Ausführungsform umfasst die elektrische Kontaktvorrichtung ein Gehäuse, in dem die Bürsteneinrichtung, die Welle und die Schleifringeinrichtung zumindest teilweise angeordnet sind und das eine Öffnung zum Einströmen des Kühlmittels aufweist. Die Öffnung kann durch eine Aussparung in dem Gehäuse gebildet sein, die durch ein entsprechendes Gitter oder ein Netz abgedeckt ist. Somit kann kühlende Umgebungsluft als Kühlmittel von außerhalb des Gehäuses in das Gehäuse eingebracht werden. Zudem kann das Gehäuse eine entsprechende Öffnung aufweisen, durch die die erwärmte Luft nach außen abgeführt wird.

Die erfindungsgemäße elektrische Maschine umfasst die erfindungsgemäße elektrische Kontaktvorrichtung. Die elektrische Maschine ist insbesondere eine doppelt gespeiste elektrische Maschine.

Die erfindungsgemäße Windkraftanlage umfasst die erfindungsgemäße elektrische Maschine. Dabei kann die elektrische Maschine insbesondere als Generator betrieben werden.

Die zuvor im Zusammenhang mit der erfindungsgemäßen elektrischen Kontaktvorrichtung beschriebenen Vorteile und Weiterbildungen gelten sinngemäß für die erfindungsgemäße elektrische Maschine und die erfindungsgemäße Windkraftanlage.

Die vorliegende Erfindung wird nun anhand der beigefügten Zeichnungen näher erläutert. Dabei zeigen:
- FIG 1: eine elektrische Kontaktvorrichtung für eine elektrische Maschine in einer geschnittenen Seitenansicht;
- FIG 2: eine Detailansicht von FIG 1;
- FIG 3: die elektrische Kontaktvorrichtung in einer Perspektivansicht;
- FIG 4: die elektrische Kontaktvorrichtung in einer weiteren geschnittenen Seitenansicht ohne Gehäuse; und
- FIG 5: die elektrische Kontaktvorrichtung gemäß FIG 4 in einer Perspektivansicht.

Die nachfolgend näher geschilderten Ausführungsbeispiele stellen bevorzugte Ausführungsformen der vorliegenden Erfindung dar.

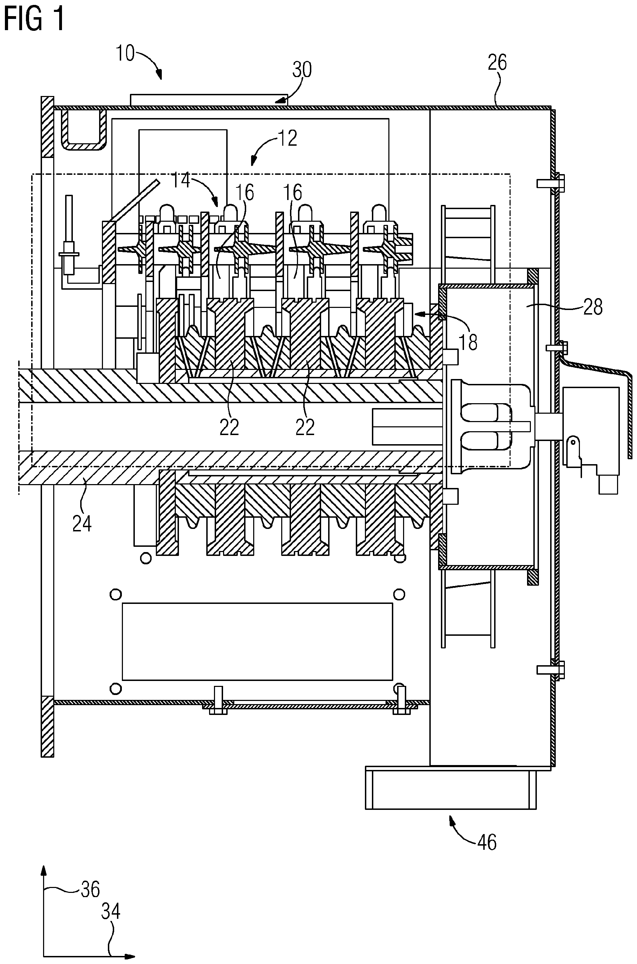

FIG 1 zeigt eine elektrische Kontaktvorrichtung 10 in einer geschnittenen Seitenansicht. Die elektrische Kontaktvorrichtung 10 umfasst eine Bürsteneinrichtung 12. Die Bürsteneinrichtung 12 umfasst wiederum einen Bürstenhalter 14, der mehrere Bürsten 16 hält. Des Weiteren umfasst die elektrische Kontaktvorrichtung 10 eine Schleifringeinrichtung 18. Die Schleifringeinrichtung 18 umfasst ein Trägerelement 20, das mehrere Schleifringe 22 trägt. In dem vorliegenden Ausführungsbeispiel umfasst die Schleifringeinrichtung 18 drei Schleifringe 22. Die Schleifringeinrichtung 18 ist drehfest auf einer Welle 24 angeordnet. Die Welle 24 ist wiederum drehbar gelagert. Somit kann die Schleifringeinrichtung 18 samt der Welle 24 relativ zu der Bürsteneinrichtung 12 gedreht werden.

Darüber hinaus umfasst die elektrische Kontaktvorrichtung 10 ein Gehäuse 26, in dem die Bürsteneinrichtung 12 und die Schleifringeinrichtung 18 angeordnet sind. Des Weiteren ist die Welle 24 teilweise in dem Gehäuse 26 angeordnet. In dem Gehäuse 26 ist weiterhin ein Radiallüfter 28 vorgesehen, der auf der Welle 24 angeordnet ist. Über eine Öffnung 30 im Gehäuse 26, die beispielsweise mit einem Gitter oder einem Netz abgedeckt ist, kann im Betrieb des Radiallüfters 28 Luft von außen in das Gehäuse 26 geführt werden.

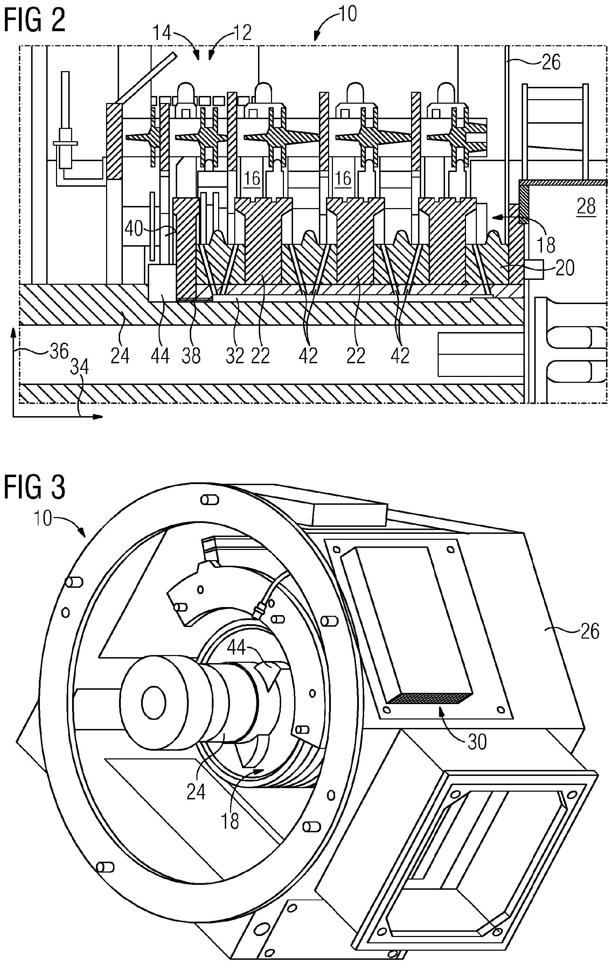

FIG 2 zeigt eine Detailansicht von FIG 1. Hier ist zu erkennen, dass zwischen der Schleifringeinrichtung 18 und der Welle 24 eine Aussparung 32 vorgesehen ist. Die Aussparung 32 erstreckt sich in radialer Richtung 34 der Welle 24 zumindest bereichsweise zwischen der Welle 24 und der Schleifringeinrichtung 18. Entlang der Umfangsrichtung der Welle 24 umgibt die Aussparung 32 die Welle 24 vollständig. Darüber hinaus umfasst die elektrische Kontaktvorrichtung 10 zumindest einen ersten Kühlkanal 38, der sich von einer ersten Stirnseite 40 der Schleifringeinrichtung 18 zu der Aussparung 32 hin erstreckt. Es können auch mehrere erste Kühlkanäle 38 vorgesehen sein, die entlang der Umfangsrichtung der Welle gleichmäßig verteilt angeordnet sind. Die ersten Kühlkanäle 38 können als entsprechende Nuten ausgebildet sein, die in die Welle 24 und/oder die Schleifringeinrichtung 18 eingebracht sind.

Des Weiteren ist eine Mehrzahl von zweiten Kühlkanälen 42 vorgesehen, die sich in dem Trägerelement 20 im Wesentlichen entlang der radialen Richtung 36 der Welle 24 erstrecken. Somit kann ein Kühlmittel, insbesondere Luft, von außen durch den ersten Kühlkanal 38 in die Aussparung 32 und von dort durch die zweiten Kühlkanäle 42 geführt werden. Ausgehend von den zweiten Kühlkanälen 42 tritt die Kühlluft in einen Bereich zwischen der Bürsteneinrichtung 12 und der Schleifringeinrichtung 18 aus. Dieser Bereich, der im Betrieb der elektrischen Kontaktvorrichtung 10 besonders erwärmt wird, kann nun effektiv gekühlt und vor einer Überhitzung geschützt werden.

FIG 3 zeigt die elektrische Kontaktvorrichtung 10 in einer Perspektivansicht. In dieser Darstellung ist insbesondere zu erkennen, dass an der Stirnseite 40 der Schleifringeinrichtung 18 Luftleitelemente 44 angeordnet sind. Vorliegend ist im Bereich des jeweiligen ersten Kühlkanals 38 jeweils ein Luftleitelement 44 angeordnet. Die Luftleitelemente 44 weisen die Form einer Luftschaufel auf. Im Betrieb der elektrischen Kontaktvorrichtung 10, das heißt wenn die Schleifringeinrichtung 18 relativ zu der Bürsteneinrichtung 12 gedreht wird, wird durch die Luftleitelemente 44 bewirkt, dass Luft von außen in den ersten Kühlkanal 38 geleitet wird. Darüber hinaus ist in FIG 3 die Öffnung 30 zu erkennen, durch die kühle Umgebungsluft von außen in das Gehäuse 26 strömen kann. An der Unterseite des Gehäuses 26 ist eine entsprechende Öffnung 46 vorgesehen, durch die die erwärmte Luft nach außen strömen kann (siehe FIG 1).

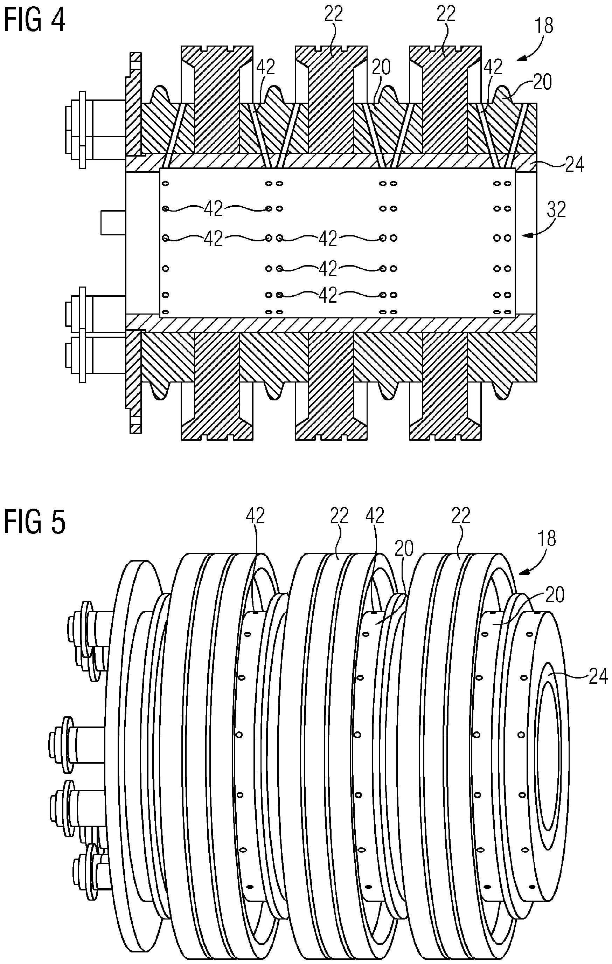

FIG 4 zeigt eine geschnittene Seitenansicht der Schleifringeinrichtung 18 und der Welle 24. Hierbei sind insbesondere die Aussparung 32 und die zweiten Kühlkanäle 42 zu erkennen, die in die Aussparung 32 münden. Des Weiteren ist aus der FIG 4 ersichtlich, dass die zweiten Kühlkanäle entlang der Umfangsrichtung der Schleifringeinrichtung 18 gleichmäßig verteilt angeordnet sind.

FIG 5 zeigt die Schleifringeinrichtung 18 und die Welle 24 in einer Perspektivansicht. Hier sind insbesondere die Austrittsöffnungen der zweiten Kühlkanäle 42 zu erkennen, die entlang der Umfangsrichtung der Schleifringeinrichtung 18 gleichmäßig verteilt angeordnet sind.

## Patentansprüche

1. Elektrische Kontaktvorrichtung (10) für eine elektrische Maschine mit
- einer Bürsteneinrichtung (12), die eine Bürste (16) umfasst,
- einer Welle (24), die drehbar zur Bürsteneinrichtung (12) gelagert ist, und
- einer Schleifringeinrichtung (18), die drehfest auf der Welle (24) angeordnet ist, wobei
- die Schleifringeinrichtung (18) einen Schleifring (22) umfasst, der mit der Bürste (16) der Bürsteneinrichtung (12) in elektrischem Kontakt steht wobei
- die Schleifringeinrichtung (18) ein Trägerelement (20) zum Halten des Schleifrings (22) aufweist und das Trägerelement (20) eine Mehrzahl von zweiten Kühlkanälen (42) zum Führen des Kühlmittels aufweist, die sich im Wesentlichen in radialer Richtung (36) der Welle (24) erstrecken,
**dadurch gekennzeichnet, dass**
- die elektrische Kontaktvorrichtung (10) zwischen der Welle (24) und der Schleifringeinrichtung (18) eine Aussparung (32) zum Führen eines Kühlmittels aufweist,
- die Aussparung (32) die Welle (24) entlang ihrer Umfangsrichtung vollständig umgibt und
wobei zwischen der Welle (24) und der Schleifringeinrichtung (18) zumindest ein erster Kühlkanal (38) angeordnet ist, der sich entlang einer axialen Richtung (34) der Welle (24) von einer Stirnseite (40) der Schleifringeinrichtung (18) zu der Aussparung (32) hin erstreckt.

2. Elektrische Kontaktvorrichtung (10) nach Anspruch 1, wobei die elektrische Kontaktvorrichtung (10) zumindest ein Luftleitelement (44) aufweist, das das Kühlmittel beim Drehen der Schleifringeinrichtung (18) in den zumindest einen ersten Kühlkanal (32) leitet.

3. Elektrische Kontaktvorrichtung (10) nach einem der vorhergehenden Ansprüche, wobei die Aussparung (32) zwischen der Welle (24) und der Schleifringeinrichtung (18) und der zumindest eine zweite Kühlkanal (42) in dem Trägerelement (20) fluidisch verbunden sind.

4. Elektrische Kontaktvorrichtung (10) nach einem der vorhergehenden Ansprüche, wobei die elektrische Kontaktvorrichtung (10) einen Radiallüfter (28) zum Fördern des Kühlmittels umfasst.

5. Elektrische Kontaktvorrichtung (10) nach einem der vorhergehenden Ansprüche, wobei die elektrische Kontaktvorrichtung (10) ein Gehäuse (26) umfasst, in dem die Bürsteneinrichtung (12), die Welle (24) und die Schleifringeinrichtung (18) zumindest teilweise angeordnet sind und das eine Öffnung (30) zum Einströmen des Kühlmittels aufweist.

6. Elektrische Maschine mit einer elektrischen Kontaktvorrichtung (10) nach einem der vorhergehenden Ansprüche.

7. Windkraftanlage mit einer elektrischen Maschine nach Anspruch 6.

## Claims

1. Electrical contact apparatus (10) for an electrical machine with
- a brush facility (12), which comprises a brush (16),
- a shaft (24), which is mounted such that it can rotate in relation to the brush facility (12), and
- a slip ring facility (18), which is arranged on the shaft (24) in a rotationally fixed manner, wherein
- the slip ring facility (18) comprises a slip ring (22), which is in electrical contact with the brush (16) of the brush facility (12), wherein
- the slip ring facility (18) has a carrier element (20) for holding the slip ring (22) and the carrier element (20) has a plurality of second cooling channels (42) for guiding the coolant, which extend substantially in the radial direction (36) of the shaft (24),
**characterised in that**
- the electrical contact apparatus (10) has a recess (32) for guiding a coolant between the shaft (24) and the slip ring facility (18),
- the recess (32) completely surrounds the shaft (24) along its circumferential direction and
wherein arranged between the shaft (24) and the slip ring facility (18) is at least one first cooling channel (38), which extends along an axial direction (34) of the shaft (24) from an end face (40) of the slip ring facility (18) to the recess (32).

2. Electrical contact apparatus (10) according to claim 1, wherein the electrical contact apparatus (10) has at least one air-conducting element (44), which conducts the coolant into the at least one first cooling channel (32) when the slip ring facility (18) rotates.

3. Electrical contact apparatus (10) according to one of the preceding claims, wherein there is a fluidic connection between the recess (32) between the shaft (24) and the slip ring facility (18) and the at least one second cooling channel (42) in the carrier element (20).

4. Electrical contact apparatus (10) according to one of the preceding claims, wherein the electrical contact apparatus (10) comprises a radial fan (28) for conveying the coolant.

5. Electrical contact apparatus (10) according to one of the preceding claims, wherein the electrical contact apparatus (10) comprises a housing (26), in which the brush facility (12), the shaft (24) and the slip ring facility (18) are at least partially arranged and which has an opening (30) into which the coolant flows.

6. Electric machine with an electrical contact apparatus (10) according to one of the preceding claims.

7. Wind turbine with an electric machine according to claim 6.

## Revendications

1. Système (10) de contact électrique d'une machine électrique, comprenant
- un dispositif (12) à balai, qui comprend un balai (16),
- un arbre (24), qui est monté tournant par rapport au dispositif (12) à balai, et
- un dispositif (18) à bague collectrice, qui est solidaire en rotation de l'arbre (24), dans lequel
- le dispositif (18) à bague collectrice comprend une bague (22) collectrice, qui est en contact électrique avec le balai (16) du dispositif (12) à balai, dans lequel
- le dispositif (18) à bague collectrice a un élément (20) de support pour retenir la bague (22) collectrice et l'élément (20) de support a une pluralité de deuxièmes conduits (42) de refroidissement pour conduire du fluide de refroidissement, qui s'étendent sensiblement dans la direction (36) radiale de l'arbre (24),
**caractérisé en ce que**
- le système (10) électrique de contact a, pour la conduite d'un fluide de refroidissement, un évidement (32) entre l'arbre (24) et le dispositif (18) à bague collectrice,
- l'évidement (32) entoure complètement l'arbre (24) suivant sa direction de pourtour et
dans lequel, entre l'arbre (24) et le dispositif (18) à bague collectrice, est disposé au moins un premier conduit (38) de refroidissement, qui s'étend suivant une direction (34) axiale de l'arbre (24) d'un côté (40) frontal du dispositif (18) à bague collectrice à l'évidement (32).

2. Système (10) de contact électrique suivant la revendication 1, dans lequel
le système (10) de contact électrique a au moins un élément (44) de conduite d'air, qui conduit le fluide de refroidissement dans le au moins un premier conduit (32) de refroidissement, lors de la rotation du dispositif (18) à bague collectrice.

3. Système (10) de contact électrique suivant l'une des revendications précédentes, dans lequel l'évidement (32) entre l'arbre (24) et le dispositif (18) à bague collectrice et le au moins un deuxième conduit (42) de refroidissement dans l'élément (20) de support sont en communication fluidiquement.

4. Système (10) de contact électrique suivant l'une des revendications précédentes, dans lequel le système (10) de contact électrique comprend un ventilateur (28) radial pour véhiculer le fluide de refroidissement.

5. Système (10) de contact électrique suivant l'une des revendications précédentes, dans lequel le système (10) de contact électrique comprend une enveloppe (26), dans laquelle sont disposés, au moins en partie, le dispositif (12) à balai, l'arbre (24) et le dispositif (18) à bague collectrice, et qui a une ouverture (30) d'entrée du fluide de refroidissement.

6. Machine électrique ayant un système (10) de contact électrique suivant l'une des revendications précédentes.

7. Eolienne, comprenant une machine électrique suivant la revendication 6.
